Europäisches Patentamt

(19) European Patent Office

Office européen des brevets

(11) Publication number: **0 255 767**
**A2**

## (12) EUROPEAN PATENT APPLICATION

(21) Application number: 87306486.9

(22) Date of filing: 22.07.87

(51) Int. Cl.⁴: **H 04 L 11/18**
H 04 L 11/16, H 04 L 11/20

(30) Priority: 31.07.86 US 891513

(43) Date of publication of application:
10.02.88 Bulletin 88/06

(84) Designated Contracting States:
DE FR GB IT NL SE

(71) Applicant: **AMERICAN TELEPHONE AND TELEGRAPH COMPANY**
**550 Madison Avenue**
**New York, NY 10022 (US)**

(72) Inventor: **Braun, Arthur Rechtman**
**7 Penrhyn Road**
**Woodridge Connecticut 06525 (US)**

**Franklin, Andrew DeJongh**
**3460 16th Street**
**Boulder Colorado 80302 (US)**

**Pepenella, Gerard Joseph**
**4405 East 122nd Avenue**
**Thronton Colorado 80241 (US)**

(74) Representative: **Buckley, Christopher Simon Thirsk et al**
**Western Electric Company Limited 5 Mornington Road**
**Woodford Green Essex IG8 OTU (GB)**

(54) Selective broadcasting arrangement for local area networks.

(57) In a Local Area Network (LAN) comprising a plurality of stations having associated ports where each port has a unique address, an arrangement for providing selective broadcasting to a subset of the plurality of stations is disclosed. A transmitting one of the stations designates the subset by specifying two or more receiving stations. Thereafter, the transmitting station generates a single data message having a single specified address of only one member of the subset. A packet switch controller defines a mask that identifies which stations are included in the subset. The packet switch controller provides the appropriate mask to the transmitting station which then transmits a data packet comprising a data message, the specified address and the appropriate mask to the LAN. Each port decodes the transmitted specified address and the mask to determine if the transmitted message is intended for its associated station as a member of the subset.

FIG. 1

**Description**

SELECTIVE BROADCASTING ARRANGEMENT FOR LOCAL AREA NETWORKS

Technical Field

This invention relates to Local Area Networks (LANs) and, in particular, to an arrangement which provides selective broadcasting of packet data messages to a subset of a plurality of receiving stations comprising a LAN.

Problem

Local Area Networks interconnect a plurality of stations having associated port circuits. The stations exchange packet-type data messages via the associated port circuits over a shared bus arrangement. A packet comprises a data message and an address which defines a unique receiving port and an associated station to which the packet is directed. Each port has a unique address so that packets can be exchanged between a transmitting station and a specified one of the receiving stations.

Typically, a packet is exchanged between one transmitting and one receiving station. However, in a shared multi-user environment, for example, when each employee in a single office connects to the same network via his/her own terminal, station users often rely on the receipt of common information to perform tasks. The need to disseminate common information to the plurality of stations is a practical result of a shared environment. Therefore, it would be advantageous to provide the capability to disseminate common information to a plurality of stations using a single transmission.

The accepted practice of disseminating common information to members of a network is to broadcast a data message. One of the most common broadcasting methods is to utilize a generic address. In addition to the unique address associated with each port, each port also has a generic address. When a transmitting station wishes to transmit a common data message to a plurality of stations, it transmits a packet containing the generic address. Each station of the network receives the transmitted data message since each port has the generic address. The use of a single generic address allows the transmitting station to address all stations. However, a user at a transmitting station may sometimes wish to transmit a common data message to only a select subset of the plurality of stations comprising the network. Several methods exist by which to achieve selective broadcasting to a subset of stations. One method includes the pre-assignment of several generic addresses to a single port. Each generic address defines membership in a particular subset of receiving stations. A transmitting station need only select the appropriate generic address to reach a particular subset of receiving stations with a common data message.

There are several problems associated with multiple generic address arrangements. One problem is that each port must maintain a list of the multiple generic addresses by which it can receive messages. The maintenance of such a list consumes large amounts of memory space. Another problem is that substantial amounts of address decoding time is required. Each port determines if a transmitted data message is intended for the port's associated station by matching a transmitted address against the list of generic addresses. A further problem is that all receiving subsets are predetermined, that is, all generic addresses are preassigned to each port, and therefore the creation of a new subset of receiving stations is precluded.

Another method of achieving selective broadcasting is to duplicate the data message and transmit to each selected station a separate, but duplicate, data message. The problem with this method is that a substantial amount of time is consumed by the transmitting station in transmitting the same data message for each selected receiving station. Another problem is that duplicated transmissions unduly tie up the network and therefore, prevent other transmissions from occurring until such time as the transmitting station concludes its broadcasting.

Shared LAN arrangements are becoming increasingly popular and therefore, an improved capability to broadcast common information to defined subsets of receiving stations is needed. The presently available selective broadcast techniques are disadvantageous because of the problems described above.

Solution

The above described problems are overcome and a technical advance in the field is achieved by providing a selective broadcasting arrangement for a LAN. In particular, a transmitting station generates a single unique station address together with a mask when it transmits a single common data message. The station address together with the mask defines the subset of receiving stations which are to receive the common data message.

To achieve selective broadcasting, a transmitting station establishes a broadcast call to a designated subset of receiving stations. A single data message is generated with an address of one of the designated receiving stations. The associated port of the transmitting station includes a translation table which provides a mask for that specific station address. The combination of the specific station address and the mask effectively creates a generic subset address. The mask defines which bits comprising that specific station address are "don't care" bits. The definition of "don't care" bits creates the effective generic subset address which uniquely defines the subset of receiving stations.

For example, assume only a two bit address and a two bit mask. Further, assume that the addresses of the receiving station are 01 and 00, respectively. To reach both stations, the mask provided defines that the address bits in the second bit position, i.e., 1 and 0, respectively, are "don't care" bits. Therefore, the transmitted effective generic address is a 0X where X indicates "don't care" and only ports having addresses with a 0 in the first bit position will receive the packet. In this manner, an effective generic subset address is created. The address portion of the data packet comprises the transmitted station address and the mask. The transmitting port applies the packet to the LAN busses and transmits the packet to the receiving stations.

Each receiving portion of each port contains mask decoding circuitry which decodes the station address and the mask to determine if the transmitted data message is intended for its associated station as a member of the designated subset. The decoding circuitry provides the circuit logic to determine which bits in the received address comprise the "don't care" bits. As previously described with respect to the example, the effective generic address is effectively a 0X. Therefore, the only significant bit to consider in determining an appropriate receiving port is the bit in the first bit position, that is, a 0. If the effective generic address matches a portion of the receiving port's unique address, that is, if the bit in the first bit position of the port's unique address is a 0, the port applies the transmitted data message to its associated station since the station is a member of the designated subset of receiving stations. However, if the effective generic address does not match a portion of the port's unique address, that is, the bit in the first bit position of the port's unique address is not a 0, the port rejects the data message since its associated station is not included in the designated subset of receiving stations.

The above-described masking arrangement for effectively creating generic subset addresses provides selective broadcasting capability for a LAN. This arrangement eliminates the need for each port to have a list of multiple generic addresses and thereby conserves memory space. Additionally, new subsets may be created with each transmitted packet since generic addresses are not preassigned to each port. The above-described arrangement further simplifies the address decoding process by including in each port non-complex circuitry for decoding the station address and the mask. A further advantage of this arrangement is that only a single data message is generated. This eliminates the need for duplicating the same data message and prevents tying-up the network for extended periods of time.

## Brief Description of the Drawing

These and other advantages of the invention may be better understood from a reading of the following description of one possible exemplary embodiment taken in conjunction with the drawings in which:

FIG. 1 illustrates a block diagram of a Local Area Network for exchanging data packets of information between a plurality of transmitting and receiving stations;

FIG. 2 illustrates the details of the port having an associated transmitting and receiving station;

FIG. 3 illustrates the details of an address/mask comparator comprising the port circuit illustrated in FIG. 2;

FIG. 4 illustrates the format of a data packet;

FIG. 5 illustrates the details of a mask translation table; and

FIG. 6 illustrates a matrix table of examples of possible subsets resulting from the generation of different masked addresses utilizing a two bit address and a two bit mask.

## Detailed Description

### Local Area Network

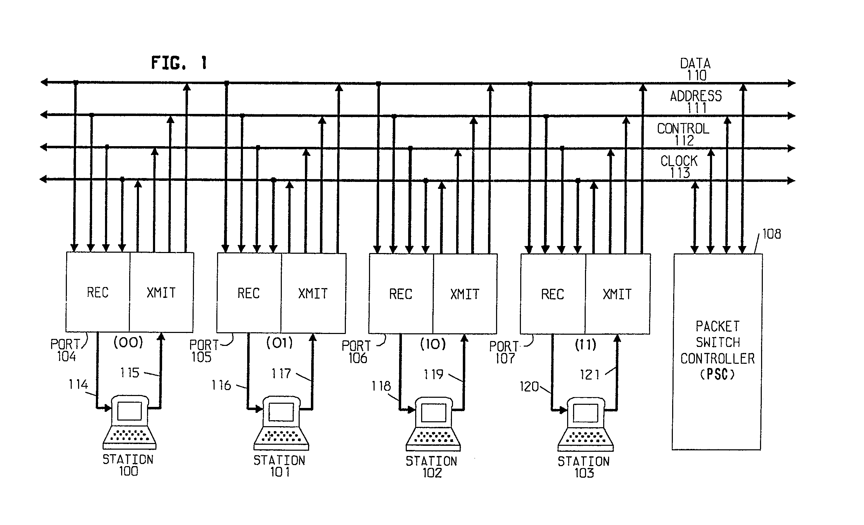

FIG. 1 illustrates a block diagram of a Local Area Network. This LAN comprises transmitting and receiving stations 100 through 103 having associated ports 104 through 107, a shared bus structure having data 110, address 111, control 112 and clock 113 busses, and packet switch controller (PSC) 108. The LAN interconnects transmitting and receiving stations 100 through 103 utilizing the shared bus structure which operates under control of PSC 108 Data packets are exchanged between stations 100 through 103 over the bus structure. For ease of description, only four stations are shown; however, a LAN may comprise a greater plurality of stations. Stations 100 through 103 may be any type of data transmitting device such as terminals or personal computers (PCs). Each station 100 through 103 connects to associated ports 104 through 107 over paths 114 through 121, respectively. Ports 104 through 107 serve as interfaces to the shared network bus structure for the receipt and transmission of packets.

The common network bus structure provides the transmission medium for exchanging data packets between stations 100 through 103. The bus structure comprises data bus 110, address bus 111, control bus 112 and clock bus 113. For ease of description, the address bus (111) and the data bus (112) are shown separately. However, in some LAN arrangements, the address and data information are confined to a single transmission bus and are not separated as shown. The address precedes the data message portion on the combined address/data bus so that the address portion of the data packet is read first in order to determine if the associated data message is intended for a port's associated station. Assume that for the remaining portion of this description that the busses are separate and that the address precedes the data message. The illustrated busses interconnect ports 104 through 107 and (PSC) 108. PSC 108 controls the establishment of connections between stations 100 through 103 for the purposes of exchanging data packets between a transmitting one and a receiving one of the stations.

### Establishment of a Connection

To establish a connection between at least two stations of the LAN, such as station 100 and station 101, PSC 108 establishes the connection in the following manner. A user at station 100 effectively goes "off-hook". An "off-hook" indication is applied from station 100 to the transmit (XMIT) side of port 104 over path 115. The XMIT side of port 104 applies this "off-hook" indication as a packet to PSC 108 over control bus 112. PSC 108 responds to the receipt of this "off-hook" indication, and applies a dial-tone indication, e.g., a prompt, to the receive (REC) side of port 104 over control path 112. Port 104 applies the prompt to station 100 over path 114.

In response to the prompt, the user at station 100 "dials" the extension number associated with station 101. Station 100 applies the extension number to the XMIT side of port 104 over path 115. The XMIT side of port 104 applies a packet containing an indication of the dialed number to PSC 108 over control bus 112. PSC 108 contains translation tables in its main memory (not shown) which associates the address of the port associated with the dialed digits of the specified destination station, i.e., station 101. PSC 108 performs a translation operation to determine the LAN address of the port, i.e., port 105, serving the specified destination station. PSC 108, following the translation operation, generates an indication such as ringing to the REC side of port 105 over control path 112. The REC side port 105 applies this indication to station 101 over path 116. If station 101 is not currently engaged in a call connection, station 101 generates an answer indication to the XMIT side of port 105 over path 117. The XMIT side of port 105 applies this indication to PSC 108 over path 112 to indicate that the call has been answered by station 101. If station 101 is currently engaged in a call connection, station 101 generates a busy indication to the XMIT side of port 105 over path 117. The XMIT side of port 105 applies this indication to PSC 108 over path 112 to indicate that station 101 is currently busy. In the later case, PSC 108 responds to this busy indication and applies a busy indication to station 100 via port 104 over control path 112. Station 100, in response to this busy indication, goes "on-hook".

Assume that the case is the former, i.e., station 101 has answered, and that PSC 108 received an answer indication. PSC 108 responds to this answer indication and applies an indication that the call has been answered to station 100 via port 104 over path 112. Following the establishment of a connection between stations 100 and 101, PSC 108 serves to establish the logical connectivity between ports 104 and 105 having associated stations 100 and 101, respectively. Logical connectivity occurs through the use of logical channels. Logical channels are virtual connections that do not require a physical link between two endpoints to maintain a connection. In particular, PSC 108 generates control information and applies this information over control bus 112 to ports 104 and 105, respectively, associated with calling and called endpoints, stations 100 and 101, respectively. The information specifies the address of the calling and called stations to transmitting port 104 which temporarily stores this information. The transmitting port transmits a data message to the destination port via the logical channel connection based on this information. The logical connection is maintained until PSC 108 removes it at the conclusion of a data message transmission.

In addition to establishing each connection on a per demand basis, PSC 108 can also establish dedicated connections between stations. These dedicated connections are permanent established connections between stations and are maintained until such time as PSC 108 drops or reconfigures the connection. This process is not described in further detail, since it comprises no portion of the invention. Assume that the connections between stations are established as recited above.

Transmission of Data Message

The above description describes the process of establishing a connection between port 104 associated with the calling station 100 and port 105 associated with the called station 101 through the exchange of control information packets as transmitted to and from PSC 108 over control bus 112. Following the establishment of a logical connection between stations, PSC 108 establishes the logical connectivity between ports 104 and 105 having associated stations 100 and 101 over address 111 and data 110 paths. The following briefly describes the process of transmitting a data message from the calling to the called stations, 100 and 101, respectively.

Port 104 having associated station 100 monitors control bus 112 to determine when a transmission of a data message can start. Control bus 112 carries framing information which indicates the start and stop of a data transmission. Control bus 112 carries an active framing signal to indicate that a current data transmission is occurring and therefore, that data 110 and address 111 busses are busy. Control bus 112 carries an inactive framing signal when no data transmission is occurring. In response to a detection of an inactive signal on control bus 112, ports 104 through 107 contend for the use of data 110 and address 111 bus to transmit a data message. A single port wins bus contention. Bus contention schemes are well known to the art. Bus contention comprises no part of the invention.

Clock bus 113 connects to a system clock (not shown) which provides a clocking signal for synchronizing the exchange of data and control transmissions between the transmitting and receiving stations and PSC 108. Each port, 104 through 107, and PSC 108 monitors clock bus 113 to determine when signals are to be placed on data 110, address 111 and control 112 busses. To effect a data transmission, a port, for example, port 104, having associated transmitting station, 100 waits for the occurrence of a clock signal. Assume that no data is extant on data bus 110 and address bus 111 and that, therefore, control bus 112 is inactive. Port 104 in response to this inactive indication and the occurrence of a clock signal on bus 113, applies a data message which includes an address and data portion from station 100 to data bus 110 and address bus 111. Assume further that the address portion extant on address bus 111 identifies receiving port 105 having associated station 101 as the destination. As previously described, each port 104 through 107 has a unique identification or address which uniquely identifies that port.

Following the application of the address and data message to address bus 111 and data bus 110, respectively, ports 104 through 107 having associated stations 100 through 103 monitor address 111 and data 110 busses to determine if the data message extant on data bus 110 is meant for it. Each port 104 through 107 comprises circuitry to compare that port's unique address with the address currently extant on address bus 111. If the address on address bus 111 does not match a port's unique address, the associated data message is not intended for the port's associated station. However, if a match occurs between the address on address bus 111 and the port's unique address, the associated data message is for that port's associated station. In the previously described example, the address of port 105 matches the address extant on address bus 111. Therefore, the associated data message is intended for its associated station 101. Port 105 transmits the data message to its associated station 101. Further details of ports 104 through 107 are described subsequently. In the above-described manner data messages are transmitted from a transmitting one of the stations to a receiving one of the stations over the shared bus structure.

### Port 104 - Transmitting Activity

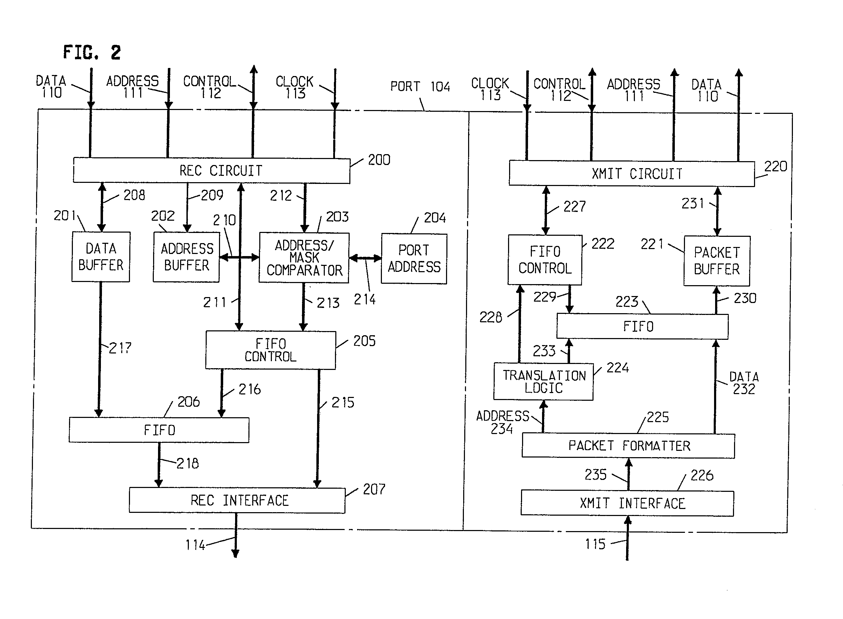

FIG. 2 discloses the details of the XMIT and REC side of a port such as port 104 having associated station 100. The details of each port 104 through 107 are substantially similar and therefore, only a single port is described. Assume that station 100 is sending a data message to a destination station, for example, station 101 having associated port 105, and therefore, the XMIT side of port 104 is currently active.

Station 100 applies the identity of the receiving station and the associated data message to XMIT interface 226 on the XMIT side of port 104 over path 115. XMIT interface 226 responds to the receipt of the receiving station identity and data message, and applies an active signal to packet formatter 225 over path 235 to indicate an occurrence of a start of a data transmission. XMIT interface 226 also collects the receiving station identity and entire data message, and applies this information to packet formatter 225 over path 235. Packet formatter 225 formats this information into a data configuration having several types of information. Typically, the data configuration comprises several types of information, but for ease of description assume that there are merely two types of information. The data configuration packet comprises the data portion which includes the data message and the destination portion which includes an indication of the designated receiving station.

Following the formation of the information into a prescribed data configuration, packet formatter 225 applies the data portion to FIFO 223 over path 232. FIFO 223 temporarily stores the data portion. Packet formatter 225 concurrently applies the destination portion to translation logic 224 over path 234. Translation logic 224 performs translation functions on the transmitted destination portion to provide a LAN destination address. The details of translation logic 224 are discussed subsequently.

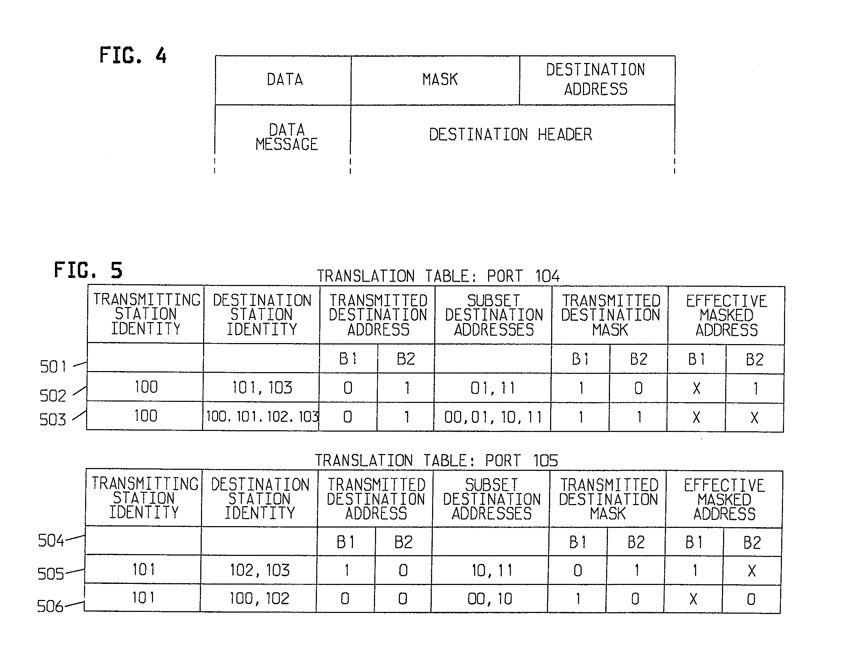

Translation logic 224 applies the destination address to FIFO 223 over path 233. FIFO 223 assembles the destination address with the data portion to produce a data packet such as the one illustrated in FIG. 4. The destination address is part of the destination header. The mask portion of the destination header is discussed subsequently. Translation logic 224 also applies an indication of ready to transmit to FIFO control 222 over path 228 following the translation function. FIFO control 222 controls the transmission of the data packet onto the LAN busses. In particular, in response to the ready to transmit indication, FIFO control 222 transmits this indication to XMIT circuit 220 over path 227. In response to the receipt of this indication, XMIT circuit 220 scans network control bus 112 to detect if address 111 bus and data 110 bus are currently busy. As previously described, an inactive signal extant on control bus 112 indicates an idle condition and an active signal indicates a busy condition. When an idle indication is present, XMIT circuit 220 applies an active signal to FIFO control 222 over path 227. FIFO control 222, in response to the active signal, applies an active signal to FIFO 223 over path 229. In response to the receipt of the active signal on path 229, FIFO 223 applies the data packet to buffer 221 over path 230. Buffer 221 stores the data packet until XMIT circuit 220 retrieves the data packet from buffer 220 over path 231 for application to the LAN busses. If the LAN busses are busy, the data packet remains stored in buffer 221 until such time as the busses become idle. Assume that the busses are idle and therefore, a transmission can occur. XMIT circuit 220 retrieves the data packet from buffer 221 over path 231, and concurrently applies the address header of the data packet to address bus 111 and the data portion of the data packet to data bus 110 in response to the receipt of a clock synchronization signal received on path 113 as previously described. In the above-described manner, the XMIT side of port 104 executes the transmission of a data packet from the associated station, i.e., 100.

The above discussion describes the circuit elements comprising the XMIT side of port 104 when station 100 is transmitting a data message. Now, assume that port 104 having associated station 100 is in the process of monitoring the LAN busses to determine if a data message extant on the LAN busses is meant for it. The following discussion describes the circuit elements comprising the REC side of port 104 as shown in FIG. 2.

### Port 104 - Receiving Activity

Each port concurrently decodes the address of a data packet extant on the LAN busses to determine if the data message is intended for the port's associated station. In particular, the REC side of port 104 monitors the LAN busses to determine if a data packet is extant on address 111 and data 110 busses. REC circuit 200 monitors control bus 112 to determine if a data transmission is occurring. As previously discussed, an active signal indicates busy and an inactive signal indicates idle. Assume that a data transmission is currently in progress and that REC circuit 200 has detected the presence of an active signal. REC circuit 200 retrieves the data packet off of the LAN busses when the clock synchronization signal, as previously discussed, is applied to REC circuit 200 over path 113. In response to the clock signal on path 113, REC circuit 200 receives the data and address of the packet over address and data busses 111 and 110, respectively. REC circuit 200 applies the data portion of the packet to data buffer 201 over path 208. Buffer 201 stores the data portion of the data packet until it is retrieved by FIFO 206 over path 217. REC circuit 200 concurrently applies the address of the packet to address buffer 202 over path 209. In response to a next clock synchronization signal on path 113, REC circuit 200 concurrently applies an active signal to data buffer 201 over path 208 and to address/mask comparator 203 over path 212. In response to the active signal on path 208, data buffer 201 applies the data portion of the packet to FIFO 206 over path 217. FIFO 206 stores the data portion of the packet until a determination is made as to whether the address specifies the associated station as an intended destination of the data message. Further details are described subsequently. In response to the active signal on path 212, comparator 203 retrieves the address stored in buffer 202 over path 210. Concurrently in response to the active signal on path 212, comparator 203 retrieves the port's unique address from port address 204 over path 214. As previously discussed, each port has a unique address that identifies the associated station for the purpose of receiving data messages.

In response to the receipt of the transmitted address on path 210 and the port address on path 214, comparator 203 performs a comparison operation between the transmitted address and the port address. The details of comparator 203 are discussed subsequently. If a match occurs between the transmitted address and the port address following the comparison, then the associated data message in the packet is intended for associated station 100 of port 104. Comparator 203, in response to the address match, generates an active signal indicative of an address match to FIFO control 205 over path 213. FIFO control 205 controls the receipt of the data packet by the associated station. FIFO control 205, in response to the active match signal, applies an accept packet signal to REC circuit 200 over path 211 to indicate that the incoming data transmission is meant for the associated station, i.e., 100 of port 104 and therefore, REC circuit 200 may proceed monitoring for a next data transmission. Concurrently, FIFO control 205, in response to the active match signal, applies an enable signal, to REC interface 207 and FIFO 206 over paths 215 and 216, respectively. FIFO 206, in response to the enable signal on path 216, applies the data message to REC interface 207 over path 218. REC interface 207 in response to the enable signal on path 215, unformats the data message and applies the data message to the associated station, i.e., 100, over path 114.

Assume now that comparator 203 does not detect a match between the transmitted address and the port's address. A signal indicative of a non-match is applied to FIFO control 205 over path 213 from comparator 203. FIFO control 205, in response to the receipt of the non-match signal, applies a disable signal to FIFO 206. This signal prevents the data portion of the packet from being applied to REC interface 207 and thereafter, to station 100. The above conditions indicates that the associated data message is not intended for port 104's associated station 100.

In the above-described manner a port transmits and receives data packets when such packets are exchanged between a transmitting one and a receiving one of the stations comprising the LAN. Now assume that a transmitting one, for example, 100, of the stations desires to address a subset of the plurality of receiving stations, for example, both 101 and 103. The following discussions provides an explanation of the arrangement to achieve selective broadcasting from one station to at least two stations included in the LAN arrangement shown in FIG. 1.

Address Masking for Selective Broadcast

As previously described, each port is associated has a unique address. The unique address defines the identity of the intended destination of receiving station. To achieve selective broadcasting, a transmitting station generates a single data message having a single unique address and a single mask. The combination of a mask and a single address effectively creates a generic subset address. The effective generic subset address allows a broadcast message to reach a prescribed subset of receiving stations. The following description discusses the arrangement for providing selective broadcasting capability in a LAN.

A user at a transmitting station requests a selective broadcast transmission. To activate a selective broadcast request, the user dials a special access code at the transmitting station. Other methods of activating a service request are available such as depressing a feature button; however, assume that in the present embodiment a user dials a special access code to effectuate selective broadcasting. An indication of this selective broadcasting request is applied as a packet via the associated port to control bus 112. PSC 108 receives this request over control bus 112 and implements an operation to activate the broadcast capability. In particular, PSC 108 queries the transmitting station via a packet which provides a prompt to the transmitting station to identify stations are to be included as destinations in the selective broadcast. PSC 108, in response to an indication of which stations are to be included, establishes connections between the stations in the manner previously described.

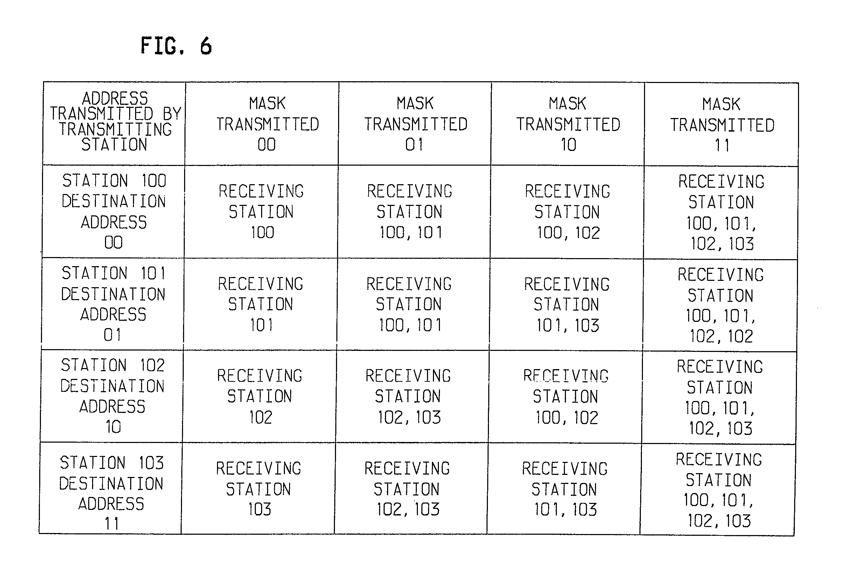

Concurrently, PSC 108 scans a translation table matrix stored in its memory (not shown) which defines different combinations of subsets of receiving stations. An example of such a matrix table for a two bit address and two bit mask is illustrated in FIG. 6. Associated with each identified subset is a mask. The mask serves to identify which bits in a unique transmitted address are "don't care" bits such that the remaining non-don't care bits, i.e., the significant bits, effectively create a generic subset address. The effective generic subset address defines the ports of the associated intended destination stations. For example, if a transmitting station generates a data message having a destination address of 00 wherein the destination address is associated station 100 and the transmitting station desires that only station 100 receive the data message, a transmitted mask of 00 is specified such that both address bits of the transmitted destination address are significant. Therefore, only station 100 having an address of 00 receives the data message. However, if the transmitting station desires to broadcast a message to receiving stations 100 and 101 and transmits a single destination address of 00 which is the address associated with station 100, a mask of 01 is transmitted in combination with the transmitted destination address. The 1 bit of the mask indicates that the second bit of the transmitted destination address is masked and therefore, only the 0 bit in the first bit position is significant. Therefore, only station 100 and 101 having addresses of 00 and 01, respectively, receive the data messages. The process of defining "don't care" and significant bits at the receiving stations is described subsequently. At this time assume that the matrix table of FIG. 6 defines the appropriate mask for a specified transmitted destination address when the designated subset of receiving stations are as shown in the table of FIG. 6.

An effective generic subset address may also be created by calculating the appropriate mask for a destination based on a specific transmitted destination address and the intended destination addresses of the receiving station. However, for ease of description, assume the table matrix is utilized in the currently described embodiment.

Following the matrix table look-up operation, PSC 108 writes into the transmitting port's translation table included in a port's translation logic element such as translation logic 224 of FIG. 2, the appropriate mask selection based on the transmitted destination address and the specified receiving stations. The transmitted destination address, as previously described, is the unique address of one of the members of the subset. Following the mask selection, the port associated with the transmitting station applies a data packet comprising the data message, the address and the mask (see FIG. 4) to the LAN busses.

As previously described, each port includes address decoding logic and each port, concurrently, decodes the transmitted address to determine if a transmitted data message is intended for its associated station. The address/mask comparator, previously described with reference to comparator 203 of FIG. 2, included in each port performs the decoding function to detect if the associated data message is for the port's associated station. The details of the mask decoding logic are discussed subsequently. If the effective generic subset address matches the port's address with respect to the significant bits, the data message is applied to that port's associated station. If the generic subset address does not match the port's address with respect to the significant bits, the data message is not applied to that port's associated station. The following description describes in detail a transmitting port's function in generating a selective broadcast message between a transmitting one of the stations and at least two receiving stations.

Assume that station 100 has requested a selective broadcast transmission and has designated stations 101 and 103 as the ultimate destinations of a common data message. In particular, station 100 generates a data message having an address of one of the ports included in the subset. As FIG. 1 illustrates ports 105 and 107 having associated stations 101 and 103, respectively, have unique addresses 01 and 11, respectively. However, station 100 need only include the address of one of the ports associated with one of the destination stations since a single address will supply the significant bit(s). Assume that the address of port 105 having associated station 101 is used, and therefore, the transmitted address is 01. For ease of description, each port address will be described with reference to a station such that stations 100, 101, 102 and 103 are associated with addresses 00, 01, 10 and 11, respectively. This is to remain congruent with respect to the matrix table shown in FIG. 6.

As the matrix table of FIG. 6 indicates if the transmitted destination address is a 01 and the specified receiving stations are 101 and 103, a mask of 10 must be transmitted as part of the data message. As previously described the mask serves to identify which of the bits, if any, in a transmitted address are "don't care" bits. By specifying "don't care" bits an effective generic subset address is formed. Following the table look-up by PSC 108 and the determination as to which mask is appropriate, PSC 108 writes the appropriate mask into a translation table of a transmitting port. Assume that port 104 of FIG. 2 is the transmitting port since station 100 is the transmitting station. PSC 108 provides the appropriate mask, 10, to port 104. This information is written into a translation table comprising translation logic 224. The method of exchanging information between ports 104 through 107 and PSC 108 was previously described and is, therefore, not discussed. The translation table included in translation logic 224 is illustrated in FIG. 5.

FIG. 5 illustrates the appearance of a translation table as it appears in translation logic 224 of port 104 when station 100 is transmitting to stations 101 and 103 at line 502, and, alternatively, when station 100 is transmitting to all stations 100, 101, 102 and 103 at line 503. FIG. 5 further illustrates the appearance of a translation table as it appears in a translation logic element of port 105 when station 101 is transmitting to stations 102 and 103 at line 505, and, alternatively, when station 101 is transmitting to stations 100 and 102 at line 506. These tables are merely illustrative of four possible broadcast transmission cases as generated from two different stations. Different table configurations occur depending on which stations are transmitting and which stations are receiving. For explanation purposes, all such variations are unnecessary in explaining the selective broadcasting arrangement. The matrix table of FIG. 6 illustrates the possible subsets available for a two-bit address and two-bit mask condition.

As FIG. 5 illustrates at line 502, the identity of the transmitting station is 100 and the identities of the destination stations are 101 and 103, respectively. Station 100, as previously discussed, transmits the destination address, a 01, of destination station 101 which is included in the subset of receiving stations. A single unique address combined with an appropriate mask effectively forms a generic subset address. The subset destination addresses of the intended receiving stations are 01 and 11, respectively. To achieve selective broadcasting to both destination stations utilizing a single address, a mask of 10 is provided by PSC 108. The mask identifies that a "don't care" bit appears in the first bit position, B1, and a significant bit appears in the second bit position, B2 as shown at lines 501 and 502. The masked address is effectively a X1 where X indicates a "don't care" status in a first bit position, B1. Only addresses that have a 1 in the B2 position will receive the associated data message. Any station having a 0 in the B2 position will not receive the associated data message. Therefore, for a transmitted destination address of 01 where the subset destination addresses are 01 and 11, a 10 mask is appropriate. The effective masked address of X1 is formed to achieve selective broadcasting from station 100 to stations 101 and 103.

FIG. 5 illustrates at lines 501 and 503 further examples of broadcasting from different stations to different destination subsets. For example, if station 100 wishes to broadcast a common data message to destination stations 100, 101, 102 and 103, a mask of 11 is provided. The 11 mask indicates that the address bits in positions B1 and B2 are both "don't cares" and therefore, every destination regardless of unique address assignment will receive the message since no significant address bits remain. The translation table for port 105 illustrates at lines 504 through 506 further broadcast transmission examples for two different subsets. The "don't care" bit positions and the significant bits vary depending on the generated transmitted destination address and the destination addresses. The broadcast transmission from station 100 to 101 and 103 at lines 501 and 502 is the only example discussed in further detail.

Following the creation of an effective generic subset address as shown in FIG. 5, translation logic 224 applies the transmitted destination address and the destination mask to FIFO 223 over path 233. As previously described, FIFO 223 appends the destination header to the data message portion of the data packet. The data packet for selective broadcasting comprises a data message, a destination address and a mask. This data packet configuration, as previously described, is shown in FIG. 4. The data packet is applied to the LAN busses in the manner previously described.

Assume that the data packet is now extant on address 111 and data 110 busses, and the REC side of each port retrieves the data packet from the LAN busses in the manner previously described. As previously described, all ports comprise the same circuitry and operate similarly.

Assume that the following description is of receiving port 105 having associated destination station 101 and that the circuit elements of FIG. 2 are applicable. Assume further that the REC side of port 105 has detected the presence of a data packet and that the transmitted address and the mask has activated the address/mask comparator.

Address Mask Decoding

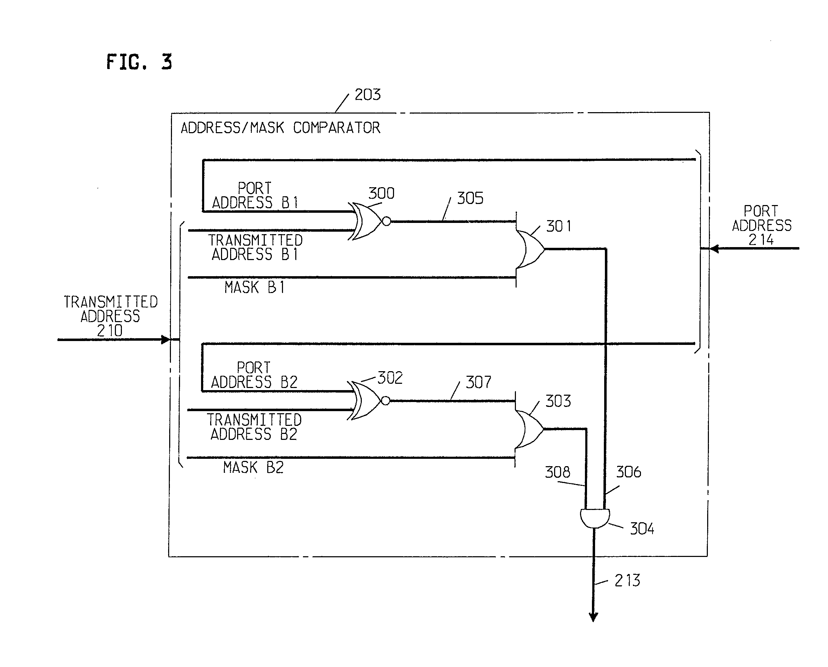

FIG. 3 discloses the details of an address/mask comparator such as comparator 203 illustrated in FIG. 2. Comparator 203 of FIG. 3 shows circuitry comprising the mask decoding logic to determine if the associated data message is intended for the port's associated station. In particular, the circuit detects the presence of a "don't care" bit with respect to the transmitted destination address. The "don't care" bit identifies which bit(s) by bit position in the receiving port's unique address is insignificant. The remaining bit(s) in the remaining bit positions of the port's unique address are significant. The detection of "don't care" bits effectively defines a generic subset address. The effective generic subset address is compared to the unique address of each port having an associated receiving station to determine if the associated transmitted data message is intended for the port's associated station as a member of the subset.

In the present example, the transmitted address is a 0 in the B1 position and a 1 in the B2 position and the mask applied is a 1 in the B1 position and a 0 in the B2 position. See FIG. 5, lines 501 and 502 of the translation table for port 104. The port address of port 105 is 01 where 0 is in the B1 position and 1 is in the B2 position.

As previously described, the port's address is stored in port address 204 of FIG. 2 and comparator 203 receives the transmitted destination address over transmitted address path 216 and the port address over path 214. Assume that the paths 210 and 214 comprise several paths where each path carries a specified one, that is, B1 and B2, of the transmitted destination address, the mask and the port address.

The following circuit logic operations are concurrently executed. However, for ease of description, each bit on each lead and each gate function will be viewed separately. The B1 bit of the port address, a 0, is applied to exclusive NOR gate 300 over port address B1 path and the B1 bit of the transmitted address, a 0, is applied to exclusive NOR gate 300 over transmitted address B1 path. The combination of a 0 on port address B1 path and a 0 on transmitted address B1 path provides an output of 1 on path 305. The 1 on path 305 is applied to OR gate 301. Concurrently, the B1 bit of the mask, a 1, is applied to OR gate 301 over mask B1 path. The combination of a 1 on path 305 and a 1 on mask B1 path to OR gate 301 provides a 1 on path 306.

Concurrently, the B2 bit of the port address, a 1, is applied to exclusive NOR gate 302 over port address B2 path and the B2 bit of the transmitted address, a 1, is applied to exclusive NOR gate 302 over transmitted address B2 path. The combination of a 1 on the port address B2 path and a 1 on the transmitted address B2 path provides an output of 1 on path 307. The 1 on path 307 is applied to OR gate 303. Concurrently, the B2 bit of the mask, a 0, is applied to OR gate 303 over mask B2 path. The combination of the 1 on path 307 and a 0 on the mask B2 path to OR gate 303 provides an output of 1 on path 308. AND gate 304 concurrently receives an input of a 1 on path 308 and a 1 on path 306. The combination of the 1 on path 308 and a 1 on path 306 provides a 1 output on path 213 from AND gate 304. This 1 indicates that the masked address is effectively generic to the port's unique address such that the associated station of the port is a member of the subset. Comparator 203 generates a match signal to FIFO control 205 over path 213, and FIFO 205 enables FIFO 206 over path 216 so as to allow associated station, 101, to receive the data message in the manner previously described.

The above-described circuit logic imputed the "don't care" status to the first bit, B1, of the port's unique address such that only the B2 bit was significant in determining whether the transmitted data message was intended for the associated station.

Now, assume that the comparator illustrated in FIG. 3 is included in the REC side of port 107 having associated station 103 which is another member of the designated subset of receivers. The address of port 107 is 11 and, as previously described, the mask applied to the transmitted destination address, 01, is a 10. The "don't care" bit is in the B1 position. Exclusive NOR gate 300 receives a 1 over port address B1 path and a 0 over transmitted address B1 path. This combination provides a 0 output on path 305. The combination of a 0 on path 305 and a 1 on mask B1 path to OR gate 301 provides a 1 output on path 306. Concurrently, exclusive NOR gate 302 receives a 1 over port address B2 path and a 1 over transmitted address B2 path. This combination of a 1 and a 1 to exclusive NOR gate 302 provides a 1 output on path 307. The combination of a 1 on path 307 and a 0 on mask B2 path to OR gate 303 provides a 1 output on path 308. The combination of a 1 on path 306 and a 1 on path 308 provides a 1 output from AND gate 304 over path 213. This 1 indicates that the masked address is effectively generic to the port's unique address such that the associated station of the port is a member of the subset. Associated station 103 will receive the data message in the manner previously described.

The above-described circuit logic imputed the "don't care" status to the first bit, B1, of the port's unique address such that only the B2 bit was significant in determining whether the transmitted data message was intended for the associated station.

Now, assume that the comparator illustrated in FIG. 3 is included in the REC side of port 106 having associated station 102 which is not a member of the designated subset of receivers. The address of port 106 is 10 and, as previously described, the mask applied to the transmitted address, 01, is a 10. The "don't care" bit is in the B1 position. Exclusive NOR gate 300 receives a 1 over port address B1 path and a 0 over transmitted address B1 path. This combination provides a 0 output on path 305. The combination of a 0 on path 305 and a 1 on mask B1, path to OR gate 301 provides a 1 output on path 306. Concurrently, exclusive NOR gate 302 receives a 0 over port address B2 path and a 1 over transmitted address B2 path. This combination provides a 0 output on path 307. The combination of a 0 on path 307 and a 0 on mask B2 path to OR gate 303 provides a 0 output on path 308. The combination of a 0 on path 308 and a 1 on path 306 provides a 0 output from AND gate 304 over path 213. This 0 indicates that associated station 102 of port 106 is not a member of the subset and therefore, the data message will not be received by it. The masked address is not effectively generic to the port's unique address. The data portion of the packet is not applied to station 102 in the manner previously described.

The above description discusses the application of a two bit mask to a two bit address to reach a number of different subsets. To reach every possible combination of ports having associated stations which comprise subsets, the mask for a two bit address requires expansion to additional bits which define mask configurations which allow a transmitting station to reach any combination of receivers it specifies. Additionally, a larger address than two bits may be masked in order to achieve selective broadcasting to a plurality of ports having associated stations. However, for ease of description only a two bit address and mask were described. Further, the comparator circuitry requires more complex logic to provide the appropriate decoding function for a larger mask and/or address. However, only a few gate logic functions were disclosed to simplify the explanation of the mask decoding process.

In the above-described manner, selective broadcasting is achieved from a transmitting one of the stations to two or more stations. A single address is manipulated with a mask as derived from a matrix translation table to effectively form a generic subset address. The mask is included in the address portion of a data packet. The transmitted data packet is received by a port. The port comprises circuit logic to determine the significant bits in the transmitted address and compares the corresponding significant bit(s) of the port's unique address to the effective generic subset address. If a match occurs, the associated station of the port is a member of the subset and it will receive the transmitted data message. If no match occurs, the associated station of the port is not a member of the subset and it will not receive the transmitted data. In the above-described manner, selective broadcasting is achieved in a multi-user environment.

While a specific embodiment of the invention has been disclosed, variations in structural detail, within the scope of the appended claims, are possible and are contemplated. There is no intention of limitation to what is contained in the abstract or the exact disclosure as herein presented. The above-described arrangements are only illustrative of the application of the principles of the invention. Normally, other arrangements may be devised by those skilled in the art without departing from the spirit and the scope of the invention.

## Claims

1. In a Local Area Network (LAN) having a selective broadcasting arrangement for transmitting messages to a subset of a plurality of stations (100-103) of said LAN wherein each of said stations (100-103) has a unique address, said arrangement comprising:

means (108, 224) responsive to a transmitting one (103) of said stations requesting a selective broadcast for generating a mask with a unique address to form an effective address generic to each member of said subset of stations;

means (220-223) for transmitting said effective generic address together with an associated data message from said transmitting station (103) to said plurality of stations (100-103); and

means (202-204) at each of sad plurality of stations (100-103) for translating said effective generic address to determine if said associated data message is intended for said station as a member of said subset.

2. The arrangement of claim 1 wherein said arrangement further comprises:

means (224) for generating said unique address associated with a single member of said subset;

means (103) for specifying each unique address for each member of said subset;

means (108) for selecting said mask based on each said specified unique address and said generated unique address; and

means (108) for identifying a portion of said generated unique address which corresponds to a like portion of each specified unique address for each member of said subset to form said effective generic address.

3. The arrangement of claim 1 wherein said arrangement further comprises:

means (200) for receiving said effective generic address at said plurality of stations;

means (204) for concurrently providing an associated unique address at each one of said plurality of stations; and

means (203) for comparing said effective generic address with said provided associated unique address of each one of said plurality of stations to determine an occurrence of a match.

4. The arrangement of claim 1 wherein said arrangement further comprises:

means (205) for enabling a transmission of said associated data message to each of said stations as members of said subset when said effective generic address matches said like portion of said provided associated unique address following said comparison.

5. In a Local Area Network (LAN), a method for disseminating data messages to a subset (100-101) of a plurality of receiving stations (100-103) wherein each station (100-102) has a unique address, said method comprises the steps of:

providing in a transmitting one (103) of said stations a mask together with a unique address to form an effective address generic to each member of said subset (100-101) of stations;

transmitting said effective generic address together with an associated data message from said transmitting station (103) to said plurality of stations (100-103); and

translating said effective generic address to determine if said associated data message is intended for each station (100-103) as a member of said subset (100-101).

6. The method of claim 5 wherein said method further comprises the steps of:

providing said unique address associated with a prescribed member (100) of said subset;

specifying each unique address for each member of said subset (100-101);

selecting said mask based on each said specified address for each member of said subset (100-101) and said provided unique address; and

identifying a portion of said provided unique address which corresponds to a like portion of each specified unique address for each member of said subset (100-101) to form said effective generic address.

7. The method of claim 5 wherein said method further comprises the steps of:

receiving said effective generic address at said plurality of stations (100-103);

concurrently, providing an assigned address of each one of said plurality of stations (100-103); and

comparing said effective generic address with said provided assigned unique address of each one of said plurality of stations (100-103) to determine an occurrence of a match.

8. The method of claim 5 wherein said method further comprises the steps of:

enabling a transmission of said associated data message to each of said stations (100-103) as members of said subset (100-101) when said effective generic address matches said like portion of each provided assigned unique address of one of said plurality of stations (100-103) following said comparison.

FIG. 1

FIG. 2

FIG. 3

ADDRESS/MASK COMPARATOR 203

PORT ADDRESS B1
TRANSMITTED ADDRESS B1
MASK B1
300
305
301

PORT ADDRESS 214

TRANSMITTED ADDRESS 210

PORT ADDRESS B2
TRANSMITTED ADDRESS B2
MASK B2
302
307
303

308    306
304

213

## FIG. 4

| DATA | MASK | DESTINATION ADDRESS |
|------|------|---------------------|
| DATA MESSAGE | DESTINATION HEADER | |

## FIG. 5

TRANSLATION TABLE: PORT 104

| TRANSMITTING STATION IDENTITY | DESTINATION STATION IDENTITY | TRANSMITTED DESTINATION ADDRESS | | SUBSET DESTINATION ADDRESSES | TRANSMITTED DESTINATION MASK | | EFFECTIVE MASKED ADDRESS | |
|---|---|---|---|---|---|---|---|---|
| | | B1 | B2 | | B1 | B2 | B1 | B2 |
| 100 | 101, 103 | 0 | 1 | 01, 11 | 1 | 0 | X | 1 |
| 100 | 100, 101, 102, 103 | 0 | 1 | 00, 01, 10, 11 | 1 | 1 | X | X |

TRANSLATION TABLE: PORT 105

| TRANSMITTING STATION IDENTITY | DESTINATION STATION IDENTITY | TRANSMITTED DESTINATION ADDRESS | | SUBSET DESTINATION ADDRESSES | TRANSMITTED DESTINATION MASK | | EFFECTIVE MASKED ADDRESS | |
|---|---|---|---|---|---|---|---|---|
| | | B1 | B2 | | B1 | B2 | B1 | B2 |
| 101 | 102, 103 | 1 | 0 | 10, 11 | 0 | 1 | 1 | X |
| 101 | 100, 102 | 0 | 0 | 00, 10 | 1 | 0 | X | 0 |

## FIG. 6

| ADDRESS TRANSMITTED BY TRANSMITTING STATION | MASK TRANSMITTED 00 | MASK TRANSMITTED 01 | MASK TRANSMITTED 10 | MASK TRANSMITTED 11 |
|---|---|---|---|---|
| STATION 100 DESTINATION ADDRESS 00 | RECEIVING STATION 100 | RECEIVING STATION 100, 101 | RECEIVING STATION 100, 102 | RECEIVING STATION 100, 101, 102, 103 |
| STATION 101 DESTINATION ADDRESS 01 | RECEIVING STATION 101 | RECEIVING STATION 100, 101 | RECEIVING STATION 101, 103 | RECEIVING STATION 100, 101, 102, 102 |
| STATION 102 DESTINATION ADDRESS 10 | RECEIVING STATION 102 | RECEIVING STATION 102, 103 | RECEIVING STATION 100, 102 | RECEIVING STATION 100, 101, 102, 103 |
| STATION 103 DESTINATION ADDRESS 11 | RECEIVING STATION 103 | RECEIVING STATION 102, 103 | RECEIVING STATION 101, 103 | RECEIVING STATION 100, 101, 102, 103 |